# FASCICULE DE BREVET EUROPEEN

(11) **EP 1 067 412 B1**
(45) Date de publication et mention de la délivrance du brevet: **12.12.2007**
(21) Numéro de dépôt: 00401856.0
(22) Date de dépôt: 29.06.2000
(51) Int. Cl.: G02B 6/02

(54) **Fibre optique à compensation de dispersion chromatique**
Dispersionkompensierende optische Faser
Dispersion compensating optical fiber

(30) Priorité: 29.06.1999 FR 9908298
(43) Date de publication de la demande: 10.01.2001
(73) Titulaire: Draka Comteq B.V., 1083 HJ Amsterdam (NL)
(72) Inventeur: Sillard, Pierre, 75014 Paris (FR); de Montmorillon, Louis-Anne, 75017 Paris (FR); Fleury, Ludovic, 78390 Bois d'Arcy (FR); Nouchi, Pascale, 78600 Maisons Laffitte (FR)
(74) Mandataire: Blokland, Arie

(56) Documents cités:
- EP-A- 0 554 714
- EP-A- 0 883 002
- US-A- 5 568 583
- US-A- 5 838 867
- VENGSARKAR A M ET AL: "DISPERSION-COMPENSATING SINGLE-MODE FIBERS: EFFICIENT DESIGNS FOR FIRST- AND SECOND-ORDER COMPENSATION" OPTICS LETTERS,US,OPTICAL SOCIETY OF AMERICA, WASHINGTON, vol. 18, no. 11, 1 juin 1993 (1993-06-01), pages 924-926, XP000304592 ISSN: 0146-9592

## Description

La présente invention concerne le domaine des transmissions par fibre optique.

Pour des fibres optiques, on qualifie généralement le profil d'indice en fonction de l'allure du graphe de la fonction qui associe au rayon de la fibre l'indice de réfraction. On représente de façon classique sur les abscisses la distance r au centre de la fibre, et sur les ordonnées la différence entre l'indice de réfraction et l'indice de réfraction de la gaine de la fibre. On parle ainsi de profil d'indice en "échelon", en "trapèze" ou en "triangle" pour des graphes qui présentent des formes respectives d'échelon, de trapèze ou de triangle. Ces courbes sont généralement représentatives du profil théorique ou de consigne de la fibre, les contraintes de fabrication de la fibre pouvant conduire à un profil sensiblement différent.

Dans les nouveaux réseaux de transmission à hauts débits et multiplexés en longueur d'onde, il est avantageux de gérer la dispersion chromatique, notamment pour des débits supérieurs ou égaux à 10 Gbit/s par canal ; l'objectif est d'obtenir, pour toutes les valeurs de longueur d'onde du multiplex, une compensation chromatique cumulée sensiblement nulle sur la liaison, de manière à limiter l'élargissement des impulsions. Une valeur cumulée de quelques centaines de ps/nm pour la dispersion est en général acceptable. Il est aussi intéressant d'éviter au voisinage des longueurs d'onde utilisées dans le système les valeurs nulles de la dispersion chromatique, pour lesquelles les effets non-linéaires sont plus importants. Enfin, il est aussi intéressant de limiter la pente de dispersion chromatique sur la plage du multiplex de manière à éviter ou limiter les distorsions entre les canaux du multiplex.

On utilise classiquement comme fibre de ligne pour les systèmes de transmissions à fibres optiques des fibres à saut d'indice dites SMF (pour Single Mode Fiber en anglais). La demanderesse commercialise ainsi sous référence ASMF 200 une fibre monomode à saut d'indice présentant une longueur d'onde λ₀ d'annulation de la dispersion chromatique entre 1300 et 1320 nm, et une dispersion chromatique inférieure ou égale à 3,5 ps/nm/km dans une plage de 1285 à 1330 nm, et de 17 ps/nm.km à 1550 nm. La pente de la dispersion chromatique à 1550 nm est de l'ordre de 0,06 ps/nm².km.

Pour compenser la dispersion chromatique et la pente de la dispersion chromatique de ces fibres SMF, initialement installées pour fonctionner autour de 1310 nm, et que l'on souhaite utiliser à présent comme fibres de ligne sur une fenêtre située autour de 1550 nm, le document WO 98/04941 décrit une fibre optique à compensation de dispersion (DCF pour Dispersion Compensating Fiber en anglais) présentant, à 1550 nm, une forte valeur de dispersion chromatique négative, typiquement inférieure à -150 ps/nm.km. Afin de limiter les effets non linéaires, cette fibre a en outre une surface effective de mode supérieure à 30 µm² à 1550 nm. D'autre part, selon l'un des modes de réalisation décrits dans ce document, la pente de la dispersion chromatique de cette fibre peut être comprise entre -5 et -0,1 ps/nm².km, toujours à 1550 nm.

De telles valeurs lui permettent notamment d'être utilisée pour compenser la dispersion d'une fibre dite NZ-DSF (pour Non-Zero Dispersion Shifted Fiber en anglais) dont la dispersion chromatique est comprise entre 6 et 10 ps/nm.km et la pente de dispersion chromatique est inférieure à 0,07 ps/nm².km à 1550 nm.

On qualifie de DSF des fibres telles qu'à la longueur d'onde de transmission à laquelle elles sont utilisées, qui est en général différente de la longueur d'onde de 1,3 µm pour laquelle la dispersion de la silice est sensiblement nulle, leur dispersion chromatique est sensiblement nulle ; en d'autres termes, la dispersion chromatique de la silice, non nulle, est compensée - d'où l'emploi du terme décalé - par une augmentation de l'écart d'indice Δn entre le coeur de la fibre et la gaine optique. Cet écart d'indice permet de décaler la longueur d'onde pour laquelle la dispersion chromatique est sensiblement nulle ; il est obtenu par l'introduction de dopants dans la préforme, lors de la fabrication de celle-ci, par exemple par un procédé MCVD connu en soi, et qui n'est pas décrit plus en détail ici.

On qualifie de NZ-DSF des fibres à dispersion décalée présentant une dispersion chromatique non-nulle pour les longueurs d'onde auxquelles elles sont utilisées.

La fibre DCF du document WO 98/04941, bien que susceptible compte tenu de ses caractéristiques optiques de compenser la dispersion des fibres DSF et NZ-DSF et plus particulièrement de celle ayant les caractéristiques mentionnées plus haut, n'est pas adaptée car elle présente des pertes par courbure très importantes (de l'ordre de 0,3 dB/m pour un enroulement de 100 tours avec un rayon de 30 mm) étant donné que la différence d'indice entre la partie centrale de son coeur et sa gaine optique est limitée.

La présente invention a pour objet de mettre au point une fibre à compensation de dispersion capable notamment de compenser la dispersion chromatique d'une fibre NZ-DSF dont la dispersion chromatique est comprise entre 5 et 11 ps/nm.km et la pente de dispersion chromatique est inférieure à 0,08 ps/nm².km à 1550 nm, tout en présentant des pertes par courbure lui permettant d'être effectivement utilisée dans les systèmes de transmission optique actuels.

La présente invention propose à cet effet une Fibre optique à compensation de dispersion présentant pour une longueur d'onde de 1550 nm une dispersion chromatique inférieure ou égale à -40 ps/nm.km, une pente de la dispersion chromatique négative, un rapport entre la dispersion chromatique et la pente de la dispersion chromatique compris entre 50 et 230 nm et une surface effective supérieure ou égale à 12 µm²,
**caractérisée en ce qu'**elle présente à 1550 nm des pertes par courbure inférieures ou égales à 0,05 dB pour un enroulement de 100 tours avec un rayon de 30 mm.

De préférence, la fibre présente pour une longueur d'onde de 1550 nm une dispersion chromatique inférieure ou égale à -50 ps/(nm.km).

La borne supérieure du rapport entre la dispersion chromatique et la pente de dispersion chromatique peut être choisi à 200 nm, 180 nm ou 160 nm.

La borne inférieure du rapport entre la dispersion chromatique et la pente de dispersion chromatique peut être choisi à 80 nm, 100 nm ou 120 nm.

Toutes les combinaisons entre ces valeurs de bornes supérieures et inférieures sont combinables pour déterminer une plage préférée pour ce rapport.

Dans un mode de réalisation, la fibre présente pour une longueur d'onde de 1550 nm une surface effective supérieure ou égale à 15 µm², de préférence supérieure ou égale à 20 µm².

Dans un autre mode de réalisation, la fibre présente pour une longueur d'onde de 1550 nm une atténuation inférieure ou égale à 1 dB/km.

Dans encore un autre mode de réalisation, la fibre présente pour une longueur d'onde de 1550 nm un diamètre de mode supérieur ou égal à 4 µm.

Avantageusement, la fibre a pour une longueur d'onde de 1550 nm une sensibilité aux micro-courbures inférieure ou égale à 1, et de préférence inférieure ou égale à 0,5.

La fibre peut présenter un profil d'indice en rectangle avec une tranchée déprimée et un anneau. Dans ce cas, il est préférable que la différence entre l'indice de la partie enterrée et l'indice de la gaine soit supérieure ou égale à -8.10⁻³.

L'invention propose aussi l'utilisation d'une telle fibre comme fibre de dispersion de compensation dans un système de transmission à fibre optique à multiplexage en longueur d'onde.

La fibre de compensation peut alors être câblée et utilisée comme fibre de ligne, ou encore être placée dans un module de compensation.

L'invention propose ensuite un système de transmission à fibre optique à multiplexage en longueur d'onde, comprenant une première section de fibre de ligne, et une deuxième section de fibre de ligne du genre défini plus haut.

La fibre de ligne de la première section présente avantageusement pour une longueur d'onde de 1550 nm une dispersion chromatique entre 5 et 11 ps/nm.km, ainsi qu'une pente de dispersion chromatique inférieure ou égale à 0,08 ps/nm².km.

Dans un mode de réalisation, le rapport de la longueur de la première section à la longueur de la seconde section est sensiblement l'inverse de la valeur absolue du rapport des dispersions chromatiques à 1550 nm des fibres de la première section et de la deuxième section.

Avantageusement, la dispersion chromatique cumulée pour chaque canal entre 1530 et 1620 nm est inférieure à 100 ps/nm, et de préférence inférieure à 50 ps/nm, en moyenne sur 100 km de transmission.

L'invention propose enfin un système de transmission à fibre optique à multiplexage en longueur d'onde, comprenant de la fibre de ligne, et de la fibre du genre défini plus haut comme fibre de compensation dans un module de compensation.

La fibre de ligne de la première section présente avantageusement pour une longueur d'onde de 1550 nm une dispersion chromatique entre 5 et 11 ps/nm.km, ainsi qu'une pente de dispersion chromatique inférieure ou égale à 0,08 ps/nm².km.

De préférence, le rapport de la longueur de la fibre de ligne à la longueur de la fibre de compensation est sensiblement l'inverse de la valeur absolue du rapport des dispersions chromatiques à 1550 nm des fibres de ligne et de compensation.

Avantageusement, la dispersion chromatique cumulée pour chaque canal entre 1530 et 1620 nm est inférieure à 100 ps/nm, et de préférence inférieure à 50 ps/nm, en moyenne sur 100 km de transmission.

D'autres caractéristiques et avantages de l'invention apparaîtront à la lecture de la description qui suit de modes de réalisation de l'invention, donnés à titre d'exemple et en référence aux dessins annexés, qui montrent
- figures 1 à 3, des représentations schématiques du profil d'indice de consigne de fibre selon différents modes de réalisation de l'invention ;
- figure 4, une représentation schématique d'une section d'un système de transmission utilisant de la fibre de compensation de dispersion selon l'invention.

L'invention propose une fibre de compensation de dispersion, présentant pour une longueur d'onde de 1550 nm, une dispersion chromatique inférieure à -40 ps/nm.km, une pente de dispersion chromatique négative, un rapport de la dispersion chromatique à la pente de la dispersion chromatique compris entre 50 et 230 nm, une surface effective supérieure à 12 µm², et des pertes par courbure inférieures ou égales à 0,05 dB.

Les caractéristiques préférés de la fibre de l'invention sont donc les suivantes:
- dispersion chromatique à 1550 nm inférieure à -40 ps/nm.km, et de préférence inférieure ou égale à -50 ps/nm.km et supérieure ou égale à -150 ps/nm.km ;
- rapport entre la dispersion chromatique et la pente de dispersion chromatique à 1550 nm compris entre 50 et 230 nm, et de préférence entre 80 et 200 nm, voire entre 100 et 180 nm, voire encore entre 120 et 160 nm ;
- surface effective supérieure à 12 µm², voire 15 µm², ou de préférence 20 µm² ;
- sensibilité aux micro-courbures à 1550 nm inférieure ou égale à 1, ou de préférence inférieure ou égale à 0,5 ;
- pertes par courbure à 1550 nm inférieures ou égales à 0,05 dB, et de préférence inférieures à 5.10⁻³ dB.

La fibre de l'invention peut être utilisée pour la compensation en ligne d'une fibre NZ-DSF dont la dispersion chromatique est comprise entre 6 et 10 ps/nm.km et la pente de dispersion chromatique est inférieure à 0,07 ps/nm².km à 1550 nm, ou de fibres de même type. Elle est particulièrement adaptée aux fibres présentant à 1550 nm une dispersion chromatique comprise entre 5 et 1 1 ps/nm.km, et une pente de dispersion chromatique inférieure à 0,08 ps/nm².km, notamment du fait de la valeur de son rapport entre la dispersion chromatique et la pente de la dispersion chromatique qui est compris entre 50 et 230 nm.

Elle peut être utilisée comme composant dans un module de compensation, c'est-à-dire non pas comme fibre de ligne, mais dans un module discret. Elle présente alors de préférence une longueur d'onde de coupure effective selon la norme UIT-T G650, inférieure ou égale à 1550 nm.

Elle peut encore être câblée et utilisée comme fibre de ligne pour la compensation, avec de préférence une longueur d'onde de coupure en câble inférieure ou égale à 1300 nm.

La fibre de l'invention permet de constituer des systèmes de transmission à très haut débit, en multiplexage en longueurs d'onde, et permet par exemple d'atteindre des débits de N × 20 Gb/s, ou de N × 40 Gb/s.

De façon connue en soi, les pertes par courbure sont évaluées en mesurant les pertes induites dans une fibre par l'enroulement de 100 tours de la fibre autour d'un tambour de rayon 30 mm. La sensibilité aux micro-courbures est évaluée de façon relative, par rapport à la fibre commercialisée par la demanderesse sous la référence ASMF 200 ; on peut employer la méthode d'écrasement de la fibre entre deux grilles, connue en soi.

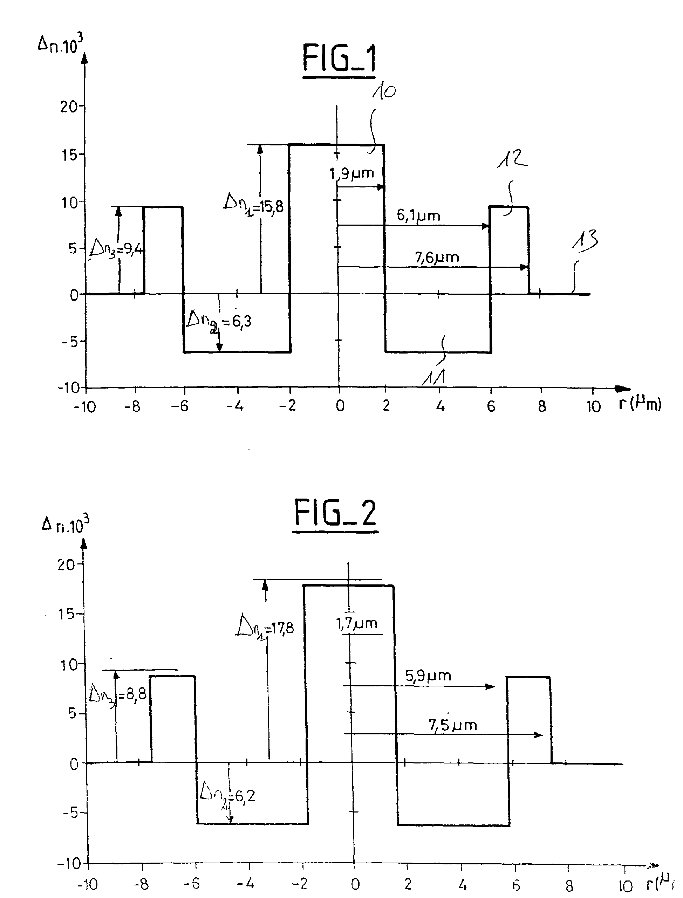

On donne dans la suite de la description en référence aux figures des exemples de profils de fibre permettant d'obtenir de telles valeurs. Les profils des figures 1 à 3 présentent une allure identique, et varient par les valeurs numériques des rayons et des indices.

La figure 1 montre une représentation schématique du profil d'indice de consigne d'une fibre selon un premier mode de réalisation de l'invention ; dans ce mode de réalisation, le profil d'indice est un profil d'indice du type en rectangle, avec une tranchée enterrée, un anneau et une gaine optique, qui présente, en partant du centre de la fibre :
- une partie centrale 10 d'indice sensiblement constant supérieur ou égal à l'indice de la gaine optique 13,
- une partie annulaire 11 ou tranchée enterrée, d'indice inférieur ou égal à l'indice de la gaine 13, ayant de préférence une différence d'indice avec la gaine supérieure à -8.10⁻³ ; une telle valeur minimale de la différence d'indice facilite la fabrication de la fibre,
- une partie annulaire 12 ou anneau d'indice supérieur ou égal à l'indice de la gaine 13 et inférieur ou égal à celui de la partie centrale 10,
- une gaine optique 13,
l'ensemble constituant un profil d'indice dit "en rectangle avec une tranchée enterrée ou déprimée".

Autour de la tranchée enterrée, la fibre de la figure 1 présente une partie annulaire ou anneau 11, c'est-à-dire une partie d'indice supérieur à l'indice de la gaine 13, d'où le qualificatif de profil en rectangle avec une tranchée enterrée et un anneau.

Les valeurs d'indices et de rayons dans le mode de réalisation de la figure 1 sont les suivantes. Le rectangle central présente un rayon r₁ de 1,9 µm et son indice présente avec l'indice de la gaine une différence Δn₁ de 15,8.10⁻³.

La tranchée enterrée s'étend entre les rayons r₁ et r₂, avec r₂ = 6,1 µm, et son indice présente avec l'indice de la gaine une différence Δn₂ de - 6,3.10⁻³.

Autour de la tranchée s'étend l'anneau, entre les rayons r₂ et r₃, avec r₃ = 7,6 µm ; elle présente par rapport à la gaine une différence d'indice Δn₃ de 9,4.10⁻³.

Autour de l'anneau s'étend la gaine de la fibre, par rapport à laquelle sont mesurées les différences d'indice.

Ces valeurs permettent d'obtenir une fibre présentant les caractéristiques suivantes:
- longueur d'onde de coupure λ_{c} : 1773 nm
- surface effective à 1550 nm : 22 µm²
- dispersion chromatique à 1550 nm : -51 ps/nm.km
- pente de dispersion chromatique à 1550 nm : -0,35 ps/nm².km
- rapport entre la dispersion chromatique et la pente de dispersion chromatique : 145 nm ;
- diamètre de mode 2W₀₂ à 1550 nm : 5,2 µm
- atténuation du fait des courbures à 1550 nm, pour 100 tours d'une bobine de rayon 30 mm, inférieure ou égale à 10⁻⁵ dB
- sensibilité aux micro-courbures à 1550 nm : 0,5.

La longueur d'onde de coupure donnée ici est la longueur d'onde de coupure théorique ; dans la pratique, la longueur d'onde de coupure effective selon la norme UIT-T G650 et la longueur d'onde mesurée sur câble sont inférieures de quelques centaines de nm ; on comprend que la fibre est effectivement monomode dans la plage de longueurs d'onde des signaux utiles, par exemple de 1530 à 1620 nm.

La figure 2 montre une représentation schématique du profil d'indice d'une autre fibre selon l'invention ; la figure montre bien que le profil a une allure similaire à celui de la figure 1, avec des valeurs numériques différentes. Ces valeurs sont les suivantes. Le rectangle présente un rayon r₁ de 1,7 µm et son indice présente avec l'indice de la gaine une différence Δn₁ de 17,8.10⁻³.

La tranchée enterrée s'étend autour du rectangle jusqu'à un rayon r₂ de 5,9 µm, et son indice présente avec l'indice de la gaine une différence Δn₂ de -6,2.10⁻³.

L'anneau s'étend autour de la tranchée, jusqu'au rayon r₃, avec r₃ = 7,5 µm ; elle présente par rapport à la gaine une différence d'indice Δn₃ de 8,8.10⁻³.

Autour de l'anneau s'étend la gaine de la fibre, par rapport à laquelle sont mesurées les différences d'indice.

Ces valeurs permettent d'obtenir une fibre présentant les caractéristiques suivantes :
- longueur d'onde de coupure λ_{c} : 1788 nm
- surface effective à 1550 nm : 20,5 µm²
- dispersion chromatique à 1550 nm : -75 ps/nm.km
- pente de dispersion chromatique à 1550 nm : - 0,51 ps/nm².km
- rapport entre la dispersion chromatique et la pente de dispersion chromatique : 147 nm ;
- diamètre de mode 2W₀₂ à 1550 nm : 5 µm
- atténuation du fait des courbures à 1550 nm, pour 100 tours d'une bobine de rayon 30 mm, inférieure ou égale à 10⁻⁵ dB
- sensibilité aux micro-courbures à 1550 nm : 0,45.

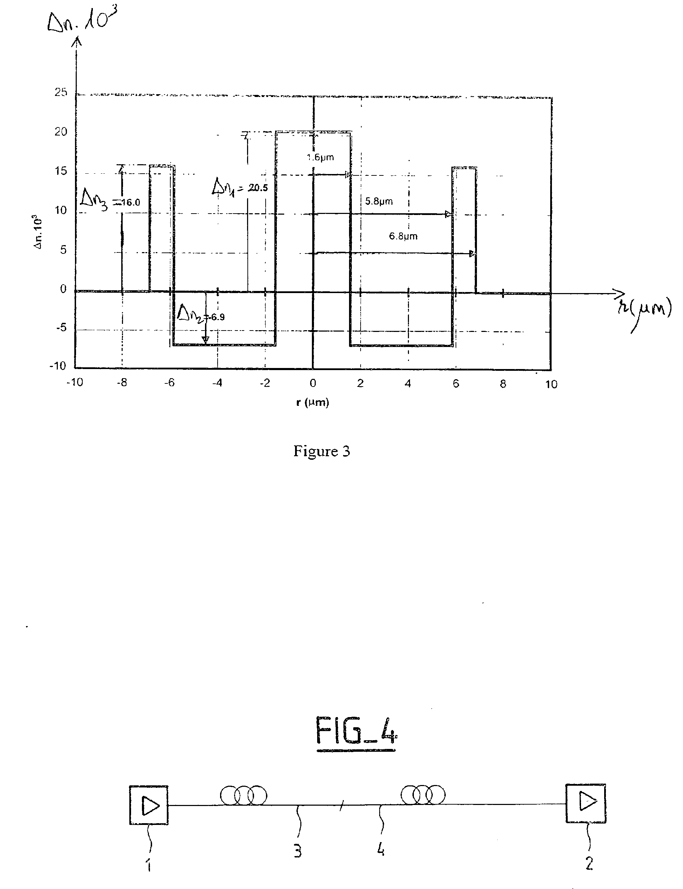

Le mode de réalisation de la figure 3 correspond à une fibre dont la dispersion chromatique est encore plus élevée que dans les fibres précédentes. Les valeurs des indices et des rayons sont les suivantes:
r₁ = 1,6 µm, Δn₁ = 20,5.10⁻³
r₂ = 5,8 µm, Δn₂ = - 6,9.10⁻³
r₃ = 6,8 µm, Δn₃ = 16.10⁻³

On obtient pour la fibre de la figure 3 les caractéristiques suivantes:
- longueur d'onde de coupure λ_{c} : 1790 nm
- surface effective à 1550 nm : 19 µm²
- dispersion chromatique à 1550 nm : -106 ps/nm.km
- pente de dispersion chromatique à 1550 nm :- 0,74 ps/nm².km
- rapport entre la dispersion chromatique et la pente de dispersion chromatique : 142 nm
- diamètre de mode 2W₀₂ à 1550 nm : 4,8 µm
- atténuation du fait des courbures à 1550 nm, pour 100 tours d'une bobine de rayon 30 mm, inférieure ou égale à 10⁻⁴ dB
- sensibilité aux micro-courbures à 1550 nm : 0,5.

Dans tous ces modes de réalisation, des variations de 5 % de l'indice Δn₁ de la partie centrale, ou de 10% des indices Δn₂ et Δn₃ de la tranchée enterrée et de l'anneau permettent d'obtenir des résultats similaires. Il en est de même des rayons, qui peuvent varier individuellement de 5% par rapport aux valeurs données dans l'exemple des figures, tout en obtenant des résultats analogues.

Plus généralement, les profils satisfaisant les conditions de l'invention présentent au moins les caractéristiques suivantes :
12.10⁻³ ≤ Δn₁ ≤ 40.10⁻³, et de préférence 15.10⁻³ ≤ Δn₁ ≤ 30.10⁻³
-8.10⁻³ ≤ Δn₂ ≤ -3.10⁻³, et de préférence -8.10⁻³ ≤ Δn₂ ≤ -4.10⁻³
1 ≤ r₁ ≤ 2,5 *µ*m, et de préférence 1,3 ≤ r₁ ≤ 2,2 *µ*m
6 ≤ r₃ ≤ 10 *µ*m, et de préférence 6,5 ≤ r₃ ≤ 9 *µ*m.

Les profils satisfaisant les conditions de l'invention peuvent en outre présenter les caractéristiques additionnelles suivantes :
0,5.10⁻³ ≤ Δn₃ ≤ 20.10⁻³, et de préférence 2.10⁻³ ≤ Δn₃ ≤ 18.10⁻³
4 ≤ r₂ ≤ 7 µm, et de préférence 4,5 ≤ r₂ ≤ 6,5 µm.

La figure 4 montre une représentation schématique d'une partie d'un système de transmission, dans lequel on utilise de la fibre de compensation selon l'invention en tant que fibre de ligne. On a représenté à la figure 4 deux amplificateurs 1 et 2 voisins du système de transmission ; entre les deux amplificateurs, la fibre de ligne est constituée d'une section 3 de fibre du type de la fibre NZ-DSF décrite plus haut (c'est-à-dire fibres présentant une dispersion chromatique comprise entre 5 et 11 ps/nm.km, et une pente de dispersion chromatique inférieure à 0,08 ps/nm².km à 1550 nm), et d'une deuxième section 4 de fibre selon l'invention. La fibre de la première section présente une dispersion chromatique à 1550 nm de 8 ps/nm.km, et une pente de dispersion chromatique à la même longueur d'onde de 0,055 ps/nm².km. L'utilisation dans la deuxième section d'une fibre de compensation de dispersion selon le mode de réalisation de la figure 1 permet de compenser sur la plage de longueurs d'onde du multiplex la dispersion chromatique cumulée dans la première section de fibre. La fibre de compensation de dispersion présente un rapport entre la dispersion chromatique et la pente de dispersion chromatique de 145 nm ; la fibre de ligne de la première section présente un rapport entre la dispersion chromatique et la pente de dispersion chromatique de 145 nm.

Le rapport des longueurs respectives des fibres de la première et de la deuxième section est choisi de manière à minimiser la dispersion chromatique cumulée sur la liaison, et dans l'exemple, peut être de l'ordre de 6,4, c'est-à-dire voisin de l'inverse du rapport 8/51 des dispersion chromatiques.

Dans un tel cas, pour une première section de fibre d'une longueur de 86 km, et une deuxième section de fibre de compensation de 14 km, la dispersion chromatique cumulée pour le canal à 1550 nm du multiplex est proche de 0 ps/nm.

Dans la plage du multiplex, c'est-à-dire entre 1530 et 1620 nm, la dispersion chromatique cumulée est inférieure à 50 ps/nm pour chaque canal, pour les 100 km des première et deuxième sections. On arrive de la sorte à limiter la dispersion chromatique cumulée à des valeurs inférieures à 100 ps/nm, pour chaque canal, en moyenne sur 100 km, comme indiqué plus haut.

La fibre de l'invention peut être fabriquée par l'homme du métier à l'aide de techniques connues, comme le MCVD ou les autres techniques couramment utilisées pour la fabrication des fibres optiques.

Bien entendu, la présente invention n'est pas limitée aux exemples et modes de réalisation décrits et représentés, mais elle est susceptible de nombreuses variantes accessibles à l'homme de l'art. Il est clair que les profils des figures 1 à 3 ne sont donnés qu'à titre d'exemple, et que d'autres profils peuvent permettre d'obtenir des fibres présentant les caractéristiques de l'invention. La fibre de l'invention peut être utilisée comme dans le mode de réalisation de la figure 4 dans un système de transmission à répéteurs, mais aussi dans un système de transmission sans répéteurs.

## Revendications

1. Fibre optique à compensation de dispersion présentant pour une longueur d'onde de 1550 nm une dispersion chromatique inférieure ou égale à -40 ps/nm.km, une pente de la dispersion chromatique négative, un rapport entre la dispersion chromatique et la pente de la dispersion chromatique compris entre 50 et 230 nm et une surface effective supérieure ou égale à 12 µm², ladite fibre comportant une gaine optique extérieure et présentant un profil d'indice consistant, de l'intérieur vers l'extérieur, en une partie centrale d'indice supérieur à l'indice de la gaine optique, une partie annulaire ou partie enterrée, d'indice inférieur à l'indice de la gaine optique, une partie annulaire ou anneau d'indice supérieur ou égal à l'indice de la gaine optique et inférieur à celui de la partie centrale, et une gaine optique.
**caractérisée en ce qu'**elle présente à 1550 nm des pertes par courbure inférieures ou égales à 0,05 dB pour un enroulement de 100 tours avec un rayon de 30 mm, ledit profil ayant les caractéristiques
12.10⁻³ ≤ Δn₁ ≤ 40.10⁻³
-8.10⁻³ ≤ Δn₂ ≤ -3.10⁻³
1 ≤ r₁ ≤ 2,5 µm
6 ≤ r₃ ≤ 10 µm
où :
Δn₁ est la différence d'indice entre la partie centrale et la gaine
Δn₂ est la différence d'indice entre la partie enterrée et la gaine
r₁ est le rayon de la partie centrale
r₃ est le rayon de l'anneau.

2. Fibre selon la revendication 1, **caractérisée en ce qu'**elle présente pour une longueur d'onde de 1550 nm une dispersion chromatique supérieure ou égale à -150 ps/nm.km.

3. Fibre selon l'une des revendications 1 ou 2, **caractérisée en ce qu'**elle présente pour une longueur d'onde de 1550 nm une dispersion chromatique inférieure ou égale à -50 ps/nm.km.

4. Fibre selon l'une des revendications 1 à 3, **caractérisée en ce qu'**elle présente pour une longueur d'onde de 1550 nm un rapport entre la dispersion chromatique et la pente de dispersion chromatique inférieur à 200 nm.

5. Fibre selon l'une des revendications 1 à 4, **caractérisée en ce qu'**elle présente pour une longueur d'onde de 1550 nm un rapport entre la dispersion chromatique et la pente de dispersion chromatique inférieur à 180 nm.

6. Fibre selon l'une des revendications 1 à 5, **caractérisée en ce qu'**elle présente pour une longueur d'onde de 1550 nm un rapport entre la dispersion chromatique et la pente de dispersion chromatique inférieur à 160 nm.

7. Fibre selon l'une des revendications 1 à 6, **caractérisée en ce qu'**elle présente pour une longueur d'onde de 1550 nm un rapport entre la dispersion chromatique et la pente de dispersion chromatique supérieur à 80 nm.

8. Fibre selon l'une des revendications 1 à 7, **caractérisée en ce qu'**elle présente pour une longueur d'onde de 1550 nm un rapport entre la dispersion chromatique et la pente de dispersion chromatique supérieur à 100 nm.

9. Fibre selon l'une des revendications 1 à 8, **caractérisée en ce qu'**elle présente pour une longueur d'onde de 1550 nm un rapport entre la dispersion chromatique et la pente de dispersion chromatique supérieur à 120 nm.

10. Fibre selon l'une des revendications 1 à 9, **caractérisée en ce qu'**elle présente pour une longueur d'onde de 1550 nm une surface effective supérieure ou égale à 15 µm², de préférence supérieure ou égale à 20 µm².

11. Fibre selon l'une des revendications 1 à 10, **caractérisée en ce qu'**elle présente pour une longueur d'onde de 1550 nm une atténuation inférieure ou égale à 1 dB/km.

12. Fibre selon l'une des revendications 1 à 11, **caractérisée en ce qu'**elle présente pour une longueur d'onde de 1550 nm un diamètre de mode supérieur ou égal à 4 µm.

13. Fibre selon l'une des revendications 1 à 12, **caractérisée en ce qu'**elle présente pour une longueur d'onde de 1550 nm une sensibilité aux micro-courbures inférieure ou égale à 1, et de préférence inférieure ou égale à 0,5.

14. Fibre selon la revendication 1, **caractérisée en ce que** la différence entre l'indice de la partie enterrée et l'indice de la gaine est supérieure ou égale à -8.10⁻³.

15. Fibre selon la revendication 14 **caractérisée en ce qu'**elle présente les caractéristiques suivantes:
15.10⁻³ ≤ Δn₁ ≤ 30.10⁻³
-8.10⁻³ ≤ Δn₂ ≤ -4.10⁻³
1,3 ≤ r₁ ≤ 2,2 µm 6,5 ≤ r₃ ≤ 9 µm,

16. Fibre selon la revendication 15 **caractérisée en ce qu'**elle présente en outre les caractéristiques suivantes :
0,5.10⁻³ ≤ Δn₃ ≤ 20.10⁻³, et de préférence 2.10⁻³ ≤ Δn₃ ≤ 18.10⁻³
4 ≤ r₂ ≤ 7 µm, et de préférence 4,5 ≤ r₂ ≤ 6,5 µm
où :
Δn₃ est la différence d'indice entre l'anneau et la gaine
r₂ est le rayon de la partie enterrée.

17. Utilisation d'une fibre selon l'une des revendications 1 à 16 comme fibre de dispersion de compensation dans un système de transmission à fibre optique à multiplexage en longueur d'onde.

18. Utilisation selon la revendication 17, la fibre de compensation étant câblée et utilisée comme fibre de ligne.

19. Utilisation selon la revendication 17, la fibre de compensation étant placée dans un module de compensation.

20. Système de transmission à fibre optique à multiplexage en longueur d'onde, comprenant une première section (3) de fibre de ligne, et une deuxième section (4) de fibre de ligne selon l'une des revendications 1 à 16.

21. Système de transmission selon la revendication 20, **caractérisé en ce que** la fibre de ligne de la première section présente pour une longueur d'onde de 1550 nm une dispersion chromatique entre 5 et 11 ps/nm.km.

22. Système de transmission selon l'une des revendications 20 ou 21, **caractérisé en ce que** la fibre de ligne de la première section présente pour une longueur d'onde de 1550 nm une pente de dispersion chromatique inférieure ou égale à 0,08 ps/nm².km.

23. Système selon l'une des revendications 20 à 22, **caractérisé en ce que** le rapport de la longueur de la première section à la longueur de la seconde section est sensiblement l'inverse de la valeur absolue du rapport des dispersions chromatiques à 1550 nm des fibres de la première section et de la deuxième section.

24. Système selon l'une des revendications 20 à 23, **caractérisé en ce que** la dispersion chromatique cumulée pour chaque canal entre 1530 et 1620 nm est inférieure à 100 ps/nm, et de préférence inférieure à 50 ps/nm, en moyenne sur 100 km de transmission.

25. Système de transmission à fibre optique à multiplexage en longueur d'onde, comprenant de la fibre de ligne, et de la fibre selon l'une des revendications 1 à 16 comme fibre de compensation dans un module de compensation.

26. Système de transmission selon la revendication 25, **caractérisé en ce que** la fibre de ligne présente pour une longueur d'onde de 1550 nm une dispersion chromatique entre 5 et 11 ps/nm.km.

27. Système de transmission selon l'une des revendications 25 ou 26, **caractérisé en ce que** la fibre de ligne présente pour une longueur d'onde de 1550 nm une pente de dispersion chromatique inférieure ou égale à 0,08 ps/nm².km.

28. Système selon l'une des revendications 25 à 27, **caractérisé en ce que** le rapport de la longueur de la fibre de ligne à la longueur de la fibre de compensation est sensiblement l'inverse de la valeur absolue du rapport des dispersions chromatiques à 1550 nm des fibres de ligne et de compensation.

29. Système selon l'une des revendications 25 à 28, **caractérisé en ce que** la dispersion chromatique cumulée pour chaque canal entre 1530 et 1620 nm est inférieure à 100 ps/nm, et de préférence inférieure à 50 ps/nm, en moyenne sur 100 km de transmission.

## Claims

1. Dispersion-compensating optical fibre having, for a wavelength of 1550 nm, a chromatic dispersion less than or equal to -40 ps/nm.km, a negative chromatic dispersion slope, a ratio between the chromatic dispersion and the chromatic dispersion slope which is between 50 and 230 nm inclusive and an effective area greater than or equal to 12 µm², said fibre comprising an outer optical cladding and having an index profile consisting of, from the inside towards the outside, a central portion having an index greater than the index of the optical cladding, an annular portion or depressed portion having an index less than the index of the optical cladding, an annular portion or ring having an index greater than the index of the optical cladding and less than that of the central portion, and an optical cladding,
**characterised in that** at 1550 nm it has bending losses less than or equal to 0.05 dB for a winding of 100 turns having a radius of 30 mm, said profile having the characteristics
12 x 10⁻³ ≤ Δn₁ ≤ 40 x 10⁻³
-8 x 10⁻³ ≤ Δn₂ ≤ -3 x 10⁻³
1 ≤ r₁ ≤ 2.5 µm
6 ≤ r₃ ≤ 10µm
wherein:
Δn₁ is the difference in index between the central portion and the cladding
Δn₂ is the difference in index between the depressed portion and the cladding
r₁ is the radius of the central portion
r₃ is the radius of the ring.

2. Fibre according to claim 1, **characterised in that** for a wavelength of 1550 nm it has a chromatic dispersion greater than or equal to -150 ps/nm.km.

3. Fibre according to one of claims 1 or 2, **characterised in that** for a wavelength of 1550 nm it has a chromatic dispersion less than or equal to -50 ps/nm.km.

4. Fibre according to one of claims 1 to 3, **characterised in that** for a wavelength of 1550 nm it has a ratio between the chromatic dispersion and the chromatic dispersion slope which is less than 200 nm.

5. Fibre according to one of claims 1 to 4, **characterised in that** for a wavelength of 1550 nm it has a ratio between the chromatic dispersion and the chromatic dispersion slope which is less than 180 nm.

6. Fibre according to one of claims 1 to 5, **characterised in that** for a wavelength of 1550 nm it has a ratio between the chromatic dispersion and the chromatic dispersion slope which is less than 160 nm.

7. Fibre according to one of claims 1 to 6, **characterised in that** for a wavelength of 1550 nm it has a ratio between the chromatic dispersion and the chromatic dispersion slope which is greater than 80 nm.

8. Fibre according to one of claims 1 to 7, **characterised in that** for a wavelength of 1550 nm it has a ratio between the chromatic dispersion and the chromatic dispersion slope which is greater than 100 nm.

9. Fibre according to one of claims 1 to 8, **characterised in that** for a wavelength of 1550 nm it has a ratio between the chromatic dispersion and the chromatic dispersion slope which is greater than 120 nm.

10. Fibre according to one of claims 1 to 9, **characterised in that** for a wavelength of 1550 nm it has an effective area greater than or equal to 15 µm², preferably greater than or equal to 20 µm².

11. Fibre according to one of claims 1 to 10, **characterised in that** for a wavelength of 1550 nm it has an attenuation less than or equal to 1 dB/km.

12. Fibre according to one of claims 1 to 11, **characterised in that** for a wavelength of 1550 nm it has a mode diameter greater than or equal to 4 µm.

13. Fibre according to one of claims 1 to 12, **characterised in that** for a wavelength of 1550 nm it has a sensitivity to microbending which is less than or equal to 1, preferably less than or equal to 0.5.

14. Fibre according to claim 1, **characterised in that** the difference between the index of the depressed portion and the index of the cladding is greater than or equal to -8 x 10⁻³.

15. Fibre according to claim 14, **characterised in that** it has the following characteristics:
15 x 10⁻³ ≤ Δn₁ ≤ 30 x 10⁻³
-8 x 10⁻³ ≤ Δn₂ ≤ -4 x 10⁻³
1.3 ≤ r₁ ≤ 2.2 µm
6.5 ≤ r₃ ≤ 9 µm.

16. Fibre according to claim 15, **characterised in that** it additionally has the following characteristics:
0.5 x 10⁻³ < Δn₃ ≤ 20 x 10⁻³, and preferably 2 x 10⁻³ < Δn₃ ≤ 18 x 10⁻³,
4 ≤ r₂ ≤ 7 µm, and preferably 4.5 ≤ r₂ ≤ 6.5 µm,
wherein:
Δn₃ is the difference in index between the ring and the cladding
r₂ is the radius of the depressed portion.

17. Use of a fibre according to one of claims 1 to 16 as dispersion-compensating fibre in a wavelength mutiplexing optical fibre transmission system.

18. Use according to claim 17, the compensating fibre being in cable and used as line fibre.

19. Use according to claim 17, the compensating fibre being placed in a compensating module.

20. Wavelength multiplexing optical fibre transmission system comprising a first section (3) of line fibre, and a second section (4) of line fibre according to one of claims 1 to 16.

21. Transmission system according to claim 20, **characterised in that** for a wavelength of 1550 nm the line fibre of the first section has a chromatic dispersion between 5 and 11 ps/nm.km.

22. Transmission system according to one of claims 20 or 21, **characterised in that** for a wavelength of 1550 nm the line fibre of the first section has a chromatic dispersion slope less than or equal to 0.08 ps/nm².km.

23. System according to one of claims 20 to 22, **characterised in that** the ratio of the length of the first section to the length of the second section is substantially the reciprocal of the absolute value of the ratio of the chromatic dispersions, at 1550 nm, of the fibres of the first section and of the second section.

24. System according to one of claims 20 to 23, **characterised in that** the cumulative chromatic dispersion for each channel between 1530 and 1620 nm is less than 100 ps/nm, and preferably less than 50 ps/nm, averaged over 100 km of transmission.

25. Wavelength multiplexing optical fibre transmission system comprising line fibre, and fibre according to one of claims 1 to 16 as compensating fibre in a compensating module.

26. Transmission system according to claim 25, **characterised in that** for a wavelength of 1550 nm the line fibre has a chromatic dispersion between 5 and 11 ps/nm.km.

27. Transmission system according to one of claims 25 or 26, **characterised in that** for a wavelength of 1550 nm the line fibre has a chromatic dispersion slope less than or equal to 0.08 ps/nm².km.

28. System according to one of claims 25 to 27, **characterised in that** the ratio of the length of the line fibre to the length of the compensating fibre is substantially the reciprocal of the absolute value of the ratio of the chromatic dispersions, at 1550 nm, of the line fibre and compensating fibre.

29. System according to one of claims 25 to 28, **characterised in that** the cumulative chromatic dispersion for each channel between 1530 and 1620 nm is less than 100 ps/nm, and preferably less than 50 ps/nm, averaged over 100 km of transmission.

## Patentansprüche

1. Optische Faser zur Dispersionskompensation, welche bei einer Wellenlänge von 1550 nm eine chromatische Dispersion kleiner oder gleich -40 ps/nm·km, eine negative Steigung der chromatischen Dispersion, ein Verhältnis zwischen der chromatischen Dispersion und der Steigung der chromatischen Dispersion, welches zwischen 50 und 230 nm enthalten ist, und eine effektive Oberfläche größer oder gleich 12 µm² aufweist, wobei die Faser eine optische äußere Hülle enthält, wobei sie ein Indexprofil aufweist, welches von innen nach außen aus einem zentralen Abschnitt mit Index größer als dem Index der optischen Hülle, einem ringförmigen Abschnitt oder vergrabenen Abschnitt mit Index kleiner als dem Index der optischen Hülle, einem ringförmigen Abschnitt oder Ring mit Index größer als dem Index der Hülle und kleiner als demjenigen des zentralen Abschnitts und einer optischen Hülle besteht,
**dadurch gekennzeichnet, dass** sie bei 1550 nm Verluste durch Krümmung kleiner oder gleich 0,05 dB für ein Aufrollen von 100 Windungen mit einem Radius von 30 mm aufweist, wobei das Profil die Eigenschaften aufweist:
12·10⁻³ ≤ Δn₁ ≤ 40.10⁻³,
-8·10⁻³ ≤ Δn₂ ≤ -3·10⁻³,
1 ≤ r₁ ≤ 2, 5 µm,
6 ≤ r₃ ≤ 10 µm,
wobei:
Δn₁ die Indexdifferenz zwischen dem zentralen Abschnitt und der Hülle ist,
Δn₂ der Indexunterschied zwischen dem vergrabenen Abschnitt und der Hülle ist,
r₁ der Radius des zentralen Abschnitts ist,
r₃ der Radius des Rings ist.

2. Faser gemäß Anspruch 1, **dadurch gekennzeichnet, dass** sie bei einer Wellenlänge von 1550 nm eine chromatische Dispersion größer oder gleich -150 ps/nm·km aufweist.

3. Faser gemäß einem der Ansprüche 1 oder 2, **dadurch gekennzeichnet, dass** sie bei einer Wellenlänge von 1550 nm eine chromatische Dispersion kleiner oder gleich -50 ps/nm·km aufweist.

4. Faser gemäß einem der Ansprüche 1 bis 3, **dadurch gekennzeichnet, dass** sie bei einer Wellenlänge von 1550 nm ein Verhältnis zwischen der chromatischen Dispersion und der Steigung der chromatischen Dispersion kleiner als 200 nm aufweist.

5. Faser gemäß einem der Ansprüche 1 bis 4, **dadurch gekennzeichnet, dass** sie bei einer Wellenlänge von 1550 nm ein Verhältnis zwischen der chromatischen Dispersion und der Steigung der chromatischen Dispersion kleiner als 180 nm aufweist.

6. Faser gemäß einem der Ansprüche 1 bis 5, **dadurch gekennzeichnet, dass** sie bei einer Wellenlänge von 1550 nm ein Verhältnis zwischen der chromatischen Dispersion und der Steigung der chromatischen Dispersion kleiner als 160 nm aufweist.

7. Faser gemäß einem der Ansprüche 1 bis 6, **dadurch gekennzeichnet, dass** sie bei einer Wellenlänge von 1550 nm ein Verhältnis zwischen der chromatischen Dispersion und der Steigung der chromatischen Dispersion größer als 80 nm aufweist.

8. Faser gemäß einem der Ansprüche 1 bis 7, **dadurch gekennzeichnet, dass** sie bei einer Wellenlänge von 1550 nm ein Verhältnis zwischen der chromatischen Dispersion und der Steigung der chromatischen Dispersion größer als 100 nm aufweist.

9. Faser gemäß einem der Ansprüche 1 bis 8, **dadurch gekennzeichnet, dass** sie bei einer Wellenlänge von 1550 nm ein Verhältnis zwischen der chromatischen Dispersion und der Steigung der chromatischen Dispersion größer als 120 nm aufweist.

10. Faser gemäß einem der Ansprüche 1 bis 9, **dadurch gekennzeichnet, dass** sie bei einer Wellenlänge von 1550 nm eine effektive Oberfläche größer oder gleich 15 µm², bevorzugt größer oder gleich 20 µm² aufweist.

11. Faser gemäß einem der Ansprüche 1 bis 10, **dadurch gekennzeichnet, dass** sie bei einer Wellenlänge von 1550 nm eine Dämpfung kleiner oder gleich 1 dB/km aufweist.

12. Faser gemäß einem der Ansprüche 1 bis 11, **dadurch gekennzeichnet, dass** sie bei einer Wellenlänge von 1550 nm einen Modendurchmesser größer oder gleich 4 µm aufweist.

13. Faser gemäß einem der Ansprüche 1 bis 12, **dadurch gekennzeichnet, dass** sie bei einer Wellenlänge von 1550 nm eine Empfindlichkeit gegenüber Mikrokrümmungen kleiner oder gleich 1 und bevorzugt kleiner oder gleich 0,5 aufweist.

14. Faser gemäß Anspruch 1, **dadurch gekennzeichnet, dass** die Differenz zwischen dem Index des vergrabenen Abschnitts und dem Index der Hülle größer oder gleich -8·10⁻³ ist.

15. Faser gemäß Anspruch 14, **dadurch gekennzeichnet, dass** sie die folgenden Eigenschaften aufweist:
15·10⁻³ ≤ Δn₁ ≤ 30·10⁻³,
-8·10⁻³ ≤ Δn₂ ≤ -4·10⁻³,
1,3 ≤ r₁ ≤ 2,2 µm,
6,5 ≤ r₃ ≤ 9 µm.

16. Faser gemäß Anspruch 15, **dadurch gekennzeichnet, dass** sie weiterhin die folgenden Eigenschaften aufweist:
0, 5·10⁻³ ≤ Δn₃ ≤ 20·10⁻³, und bevorzugt 2·10⁻³ ≤ Δn₃ ≤ 18·10⁻³, 4 ≤ r₂ ≤ 7 µm, und bevorzugt 4,5 ≤ r₂ ≤ 6,5 µm,
wobei:
Δn₃ die Indexdifferenz zwischen dem Ring und der Hülle ist,
r₂ der Radius des vergrabenen Abschnitts ist.

17. Verwendung einer Faser gemäß einem der Ansprüche 1 bis 16 als Faser zur Dispersionskompensation in einem System zur faseroptischen Übertragung mit Wellenlängenmultiplexen.

18. Verwendung gemäß Anspruch 17, wobei die Faser zur Kompensation als Leitungsfaser verkabelt und benutzt ist.

19. Verwendung gemäß Anspruch 17, wobei die Faser zur Kompensation in einem Kompensationsmodul angeordnet ist.

20. Faseroptisches Übertragungssystem mit Wellenlängenmultiplexen, umfassend einen ersten Abschnitt (3) einer Leitungsfaser, und einen zweiten Abschnitt (4) einer Leitungsfaser gemäß einem der Ansprüche 1 bis 16.

21. Übertragungssystem gemäß Anspruch 20, **dadurch gekennzeichnet, dass** die Leitungsfaser des ersten Abschnitts bei einer Wellenlänge von 1550 nm eine chromatische Dispersion zwischen 5 und 11 ps/nm·km aufweist.

22. Übertragungssystem gemäß einem der Ansprüche 20 oder 21, **dadurch gekennzeichnet, dass** die Leitungsfaser des ersten Abschnitts bei einer Wellenlänge von 1550 nm eine Steigung der chromatischen Dispersion kleiner oder gleich 0,08 ps/nm²·km aufweist.

23. System gemäß einem der Ansprüche 20 bis 22, **dadurch gekennzeichnet, dass** das Verhältnis der Länge des ersten Abschnitts zu der Länge des zweiten Abschnitts im Wesentlichen das Inverse des Absolutwerts des Verhältnisses der chromatischen Dispersionen bei 1550 nm der Fasern des ersten Abschnitts und des zweiten Abschnitts ist.

24. System gemäß einem der Ansprüche 20 bis 23, **dadurch gekennzeichnet, dass** die kumulierte chromatische Dispersion für jeden Kanal zwischen 1530 und 1620 nm im Mittel über 100 km der Übertragung kleiner als 100 ps/nm und bevorzugt kleiner als 50 ps/nm ist.

25. Faseroptisches Übertragungssystem mit Wellenlängenmultiplexen, umfassend Leitungsfaser und Faser gemäß einem der Ansprüche 1 bis 16 als Kompensationsfaser in einem Kompensationsmodul.

26. Übertragungssystem gemäß Anspruch 25, **dadurch gekennzeichnet, dass** die Leitungsfaser bei einer Wellenlänge von 1550 nm eine chromatische Dispersion zwischen 5 und 11 ps/nm·km aufweist.

27. Übertragungssystem gemäß einem der Ansprüche 25 oder 26, **dadurch gekennzeichnet, dass** die Leitungsfaser für eine Wellenlänge von 1550 nm eine Steigung der chromatischen Dispersion kleiner oder gleich 0,08 ps/nm²·km aufweist.

28. System gemäß einem der Ansprüche 25 bis 27, **dadurch gekennzeichnet, dass** das Verhältnis der Länge der Leitungsfaser zu der Länge der Kompensationsfaser im Wesentlichen das Inverse des Absolutwertes des Verhältnisses der chromatischen Dispersionen der Leitungsfaser und der Kompensationsfaser bei 1550 nm ist.

29. System gemäß einem der Ansprüche 25 bis 28, **dadurch gekennzeichnet, dass** die kumulierte chromatische Dispersion für jeden Kanal zwischen 1530 und 1620 nm im Mittel über 100 km der Übertragung kleiner als 100 ps/nm und bevorzugt kleiner als 50 ps/nm ist.
